# EUROPÄISCHE PATENTANMELDUNG

(11) **EP 3 147 067 A1**
(43) Veröffentlichungstag der Anmeldung: **29.03.2017**
(21) Anmeldenummer: 16186903.7
(22) Anmeldetag: 01.09.2016
(51) Int. Cl.: B23K 15/00, B23K 26/342, B23K 103/14, B23K 26/60

(54) **VORRICHTUNG UND VERFAHREN ZUR HERSTELLUNG UND/ODER REPARATUR VON, INSBESONDERE ROTATIONSSYMMETRISCHEN, BAUTEILEN**

(30) Priorität: 25.09.2015 DE 102015218477; 24.11.2015 DE 102015223189
(71) Anmelder: MTU Aero Engines AG, 80995 München (DE)
(72) Erfinder: Schloffer, Martin, 81247 München (DE); Richter, Karl-Hermann, 85229 Markt Indersdorf (DE)

(57) **Zusammenfassung**

Die Erfindung betrifft eine Vorrichtung und ein Verfahren zur Herstellung und/oder Reparatur von, insbesondere rotationssymmetrischen, Bauteilen mit den folgenden Schritten:
a. Bereitstellen eines Bauteils (18) und/oder einer Startplattfoim (14),
b. Platzieren des Bauteils (18) und/oder der Startplattform (14) auf einen Probentisch,
c. Vorheizen des Bauteils (18) und/oder der Startplattfoim (14) auf eine bestimmte Temperatur mittels einer Heizquelle (20),
d. Aufbringen eines drahtförmigen und/oder stangenförmigen Schweißzusatzwerkstoffs (60), der TiAl beinhaltet, auf das Bauteil (18) und/oder Startplattfoim (14) mittels Auftragsschweißen, indem eine Energiequelle (56) den, insbesondere drahtförmigen und/oder stangenförmigen, Schweißzusatzwerkstoff (60) aufschmilzt.

Dabei liegt in Schritt c.) die bestimmte Temperatur, die insbesondere zwischen 500° und 850° beträgt, zwischen 300°C unterhalb und 50°C oberhalb der spröd-duktilen Übergangstemperatur des Werkstoffs des Bauteils.

## Beschreibung

Die Erfindung betrifft ein Verfahren zur Herstellung und/oder Reparatur von, insbesondere rotationssymmetrischen, Bauteilen nach dem Oberbegriff des Anspruchs 1. Die Erfindung betrifft ferner eine entsprechende Vorrichtung gemäß dem Oberbegriff des Anspruchs 9.

Es ist bekannt, Bauteile aus Titan-Aluminid (γ-TiAl) zu gießen bzw. zu schmieden. Allerdings werden die Bauteile immer komplexer und größer, wobei die Wandstärken der Bauteile aus Gewichtsgründen immer kleiner werden. Werden solche TiAl-Bauteile in sehr geringen Stückzahlen benötigt, wird die klassische Herstellung unrentabel oder ist wegen der steigenden Komplexität nicht mehr möglich.

So bietet sich die generative Herstellung mittels Pulver an. Virtuell wird das zu erzeugende Bauteil in mehrere zueinander parallele Schichten aufgeteilt. Dabei wird das Metallpulver mit einem Laser an den Stellen angesintert bzw. aufgeschmolzen, die der derzeitigen Bauteilschicht des virtuellen Modells entsprechen. Das auf einer Plattform befindliche Bauteil wird ein Stück weit herabgesenkt. Frisches Metallpulver wird auf die Oberfläche aufgetragen. Anschließend wird die nächste Schicht entsprechend den virtuellen Daten aufgeheizt. Dies wiederholt sich, bis alle Schicht erzeugt wurden.

Allerdings besteht bei solchen Pulverbett-basierten Verfahren eine hohe Gefahr für die Bildung von Poren, Verunreinigungen und Anbindefehlern.

Somit liegt der vorliegenden Erfindung die Aufgabe zu Grunde, ein Verfahren und eine entsprechende Vorrichtung vorzustellen, die die kostengünstige Herstellung von TiAl-Bauteilen in geringen Stückzahlen möglich macht.

Die Aufgabe wird durch die Merkmale des Anspruchs 1 gelöst. Die Aufgabe wird ferner durch die Merkmale des Anspruchs 9 gelöst.

Die Erfindung betrifft ein Verfahren zur Herstellung und/oder Reparatur von, insbesondere rotationssymmetrischen, Bauteilen. Das Verfahren weist folgende Schritte auf. In Schritt a.) wird ein Bauteil und/oder eine Startplattform bereitgestellt. Diese Startplattform kann aus einer hochtemperaturbeständigen Legierung hergestellt sein. Dazu gehören beispielsweise Ni-, Co-, Fe- und/oder Mo-Basislegierungen. In Schritt b.) wird das Bauteil bzw. die Startplattform auf einen Probentisch platziert. Anschließend wird in Schritt c.) das Bauteil bzw. die Startplattform auf eine bestimmte Temperatur mittels einer Heizquelle vorgeheizt. Dann wird in Schritt d.) ein drahtförmiger bzw. stangenförmiger Schweißzusatzwerkstoff mit TiAl, auf das Bauteil bzw. auf die Startplattform mittels Auftragsschweißen aufgebracht. Dabei kann das TiAl des Schweißzusatzwerkstoffes eine Zusammensetzung aufweisen, die das Abdampfen von Aluminium aus dem Schweißzusatzwerkstoff während des Schritts d.) berücksichtigt, gar teilweise oder ganz verhindert. Dabei bringt eine Energiequelle den Schweißzusatzwerkstoff zum Schmelzen. Gemäß der vorliegenden Erfindung liegt die bestimmte Temperatur beim Vorheizen in Schritt c.) dabei zwischen 300°C unterhalb und 50°C oberhalb der spröd-duktilen Übergangstemperatur des Bauteilwerkstoffs. Insbesondere kann die Temperatur zwischen 500°C und 850°C liegen.

Dieses Verfahren hat den Vorteil, dass die Herstellzeiten gering sind und eine hohe Materialausbeute erzielt wird. Ferner kann die Herstellung endkonturnah erfolgen. Auch sehr komplexe Formgebungen sind nun damit möglich.

In einer vorteilhaften Ausgestaltung der Erfindung wird der Schritt c.) und/oder der Schritt d.) unter Vakuum, insbesondere bei einem Druck von weniger als 10⁻³ mbar, durchgeführt. Das Vakuum bietet den Vorteil, dass sehr geringe Wärmeverluste über die Wärmeleitung vorliegen.

In einer weiteren vorteilhaften Ausgestaltung der Erfindung findet das Vorheizen in Schritt c.) mittels eines Strahlungsofens, eines Lasers und/oder einer Elektronenquelle statt. Vorzugsweise beträgt die Heizleistung zwischen 400W und 1200W. Dies hat den Vorteil, dass auch komplexe und große Bauteile gleichmäßig vorgewärmt werden können.

In einer weiteren vorteilhaften Ausgestaltung der Erfindung wird in Schritt d.) als Energiequelle mindestens ein Laser und/oder mindestens eine Elektronenquelle verwendet. Diese Energiequellen können in vorteilhafterweise sehr schnell in allen Raumrichtungen umgelenkt werden. Durch Verwendung des Elektronenstrahles lassen sich höhere Auftragsraten als über einen Laserstrahl erreichen, da mehr Energie pro Zeiteinheit eingebracht werden kann und die Ablenkung schneller (elektrische Spulen) als beim Laser ist (mechanische Linsen). Dadurch steigt die Wirtschaftlichkeit des Elektronenstrahlverfahrens. Der Laser ist dagegen weniger anfällig gegenüber Störungen durch ein elektrisches Feld von einem Strahlungsofen. Kann die Ableitung des Elektronenstrahles als Energiequelle durch die Störfelder des Strahlungsofens nicht kompensiert werden, besteht die Möglichkeit, das gesamte Bauteil nur mittels des Elektronenstrahls als Heizquelle vorzuheizen. Es ist auch eine Aufheizung des gesamten Bauteils nur mittels Laser als Heizquelle denkbar, jedoch würde dies über einen separaten zweiten oder mehrere weitere Laser realisiert werden. Zusätzlich kann die Temperatur über einen Temperatursensor, wie Pyrometer und/oder Thermoelement, kontrolliert und/oder geregelt werden.

In einer weiteren vorteilhaften Ausgestaltung der Erfindung beträgt der Durchmesser des drahtförmigen und/oder stangenförmigen Schweißzusatzwerkstoff 0,3 bis 2mm.
Dies ermöglicht einen kontinuierlichen Vorschub, so dass das Mikrogefüge des Zusatzwerkstoffs nach dem Schmelzen reproduzierbar ist.

In einer weiteren vorteilhaften Ausgestaltung der Erfindung wird in Schritt c.) und/oder in Schritt d.) das Bauteil und/oder die Startplattform, insbesondere kontinuierlich, gedreht. Dies hat den Vorteil, dass insbesondere große rotationssymmetrische Bauteile auch unter Vakuum im Baubereich einheitlich vorgeheizt werden können, so dass beim Drahtauftragsschweißen von TiAl-Werkstoff keine Mikrorisse entstehen.

In einer weiteren vorteilhaften Ausgestaltung der Erfindung ist das Bauteil ein Leitkranz, ein Gehäuseteil im Verdichter und/oder Turbine, ein Austrittsleitrad, ein Statorsegment und/oder ein Dichtungsring. Solche Bauteile sind besonders groß und rotationssymmetrisch. Oftmals weisen solche Bauteile geringe und unterschiedliche Wandstärken auf, so dass beispielsweise mittels einer Induktionsheizung kaum oder unterschiedlich starker Induktionsstrom in der Bauteilwand fließt. Diese Bauteile können aus TiAl hergestellt sein.

Ferner betrifft die Erfindung eine Vorrichtung zur Herstellung und/oder Reparatur von, insbesondere rotationssymmetrischen, Bauteilen. Die Vorrichtung umfasst eine Prozesskammer, einen rotatorisch und/oder translatorisch beweglichen Probentisch, eine ringförmige Heizquelle, die um einen über den Probentisch angeordneten Heizbereich angeordnet ist, und einen Probenkopf mit mindestens einer Energiequelle zum Aufschmelzen eines Schweißzusatzstoffes und mit einer Zuführeinheit des insbesondere drahtförmigen bzw. stangenförmigen Schweißzusatzstoffes, der vorzugsweise TiAl beinhaltet. So kann die Zuführeinheit eine Drahtdüse sein.

Dabei ist die Heizquelle vorzugsweise aus mehreren Einzelsegmenten aufgebaut. Es können zum Beispiel mindestens zwei Einzelsegmente nebeneinander angeordnet sein. Dies bietet den Vorteil, dass die Anzahl der Einzelsegmente an den Durchmesser des Bauteils angepasst werden kann. Damit kann gewährleistet werden, dass die Heizquelle ausreichend nah an dem herzustellenden bzw. an dem zu reparierenden Bauteil angeordnet werden kann. Insbesondere sollte der Abstand zwischen dem Bauteil und dem Heizquelle zwischen 1cm und 30cm betragen. Vorzugsweise kann die Prozesskammer eine starke, am Flansch wassergekühlte Rotationsvakuumpumpe an der Gehäusewand der Prozesskammer aufweisen. Abgesaugtes Gas vom Vorreinigen und Spülen mit Edelgas (Ar,He) kann gereinigt und wiederverwendet werden.

In einer weiteren vorteilhaften Ausgestaltung der Erfindung umfasst die Vorrichtung einen Vorratsbehälter und/oder eine Fördereinheit für einen Schweißzusatzwerkstoff, die in der Prozesskammer angeordnet ist bzw. sind. So kann der Vorratsbehälter beispielsweise eine Rolle mit aufgewickeltem TiAl-Draht sein. Die Fördereinheit kann eine Antriebsrolle sein, die den Draht vorschieben kann. Der Schweißzusatzwerkstoff kann als Drahtmaterial auf einer Rolle und als Stangenmaterial in einem zylindrischen Stangenzuförderer in der Vorrichtung unter Vakuum gelagert sein. Über eine separate Schleuse kann Material nachgefüllt werden. Die Stangen können ohne Verschweißen, Stoß an Stoß, oder als zusammengeschweißter Draht zum Probenkopf geführt werden.

In einer weiteren vorteilhaften Ausgestaltung der Erfindung weist die die Heizquelle einen Laser, eine Elektronenquelle und/oder einen Strahlungsofen auf.

In einer weiteren vorteilhaften Ausgestaltung der Erfindung weist das Einzelsegment mindestens einen Leuchtkörper und/oder mindestens einen, insbesondere wassergekühlten, Metallblock auf. Vorzugsweise ist der Leuchtkörper in dem, insbesondere verspiegelten, Metallblock angeordnet. Dies hat den Vorteil, dass die Wärmestrahlung des mindestens einen Leuchtkörpers besser ausgenutzt werden kann. Ferner kann wegen der Wärmeleitfähigkeit des Metallblocks die vom Leuchtkörper erzeugte Wärme besser abtransportiert werden.

In einer weiteren vorteilhaften Ausgestaltung der Erfindung weist die Energiequelle einen Laser und/oder eine Elektronenquelle auf. Einerseits lassen sich mit einer Elektronenquelle höhere Auftragsraten erzeugen als mit einem Laser. Doch sind die Elektronenstrahlen gegenüber elektrische Störfelder, beispielsweise von einer Strahlungsheizung, anfälliger als Laserstrahlen.

Weitere vorteilhafte Ausgestaltungen der Erfindung sind in den Unteransprüchen wiedergegeben.

Im Weiteren werden anhand der schematischen Zeichnungen bevorzugte Ausführungsbeispiele der Erfindung näher beschrieben. Dabei zeigen:
- - Figur 1:: eine Draufsicht auf die erfindungsgemäße Vorrichtung
- - Figur 2:: eine Seitenansicht der erfindungsgemäßen Vorrichtung, und
- - Figur 3:: die einzelnen Verfahrensschritte zur Herstellung bzw. Reparatur eines Bauteils.

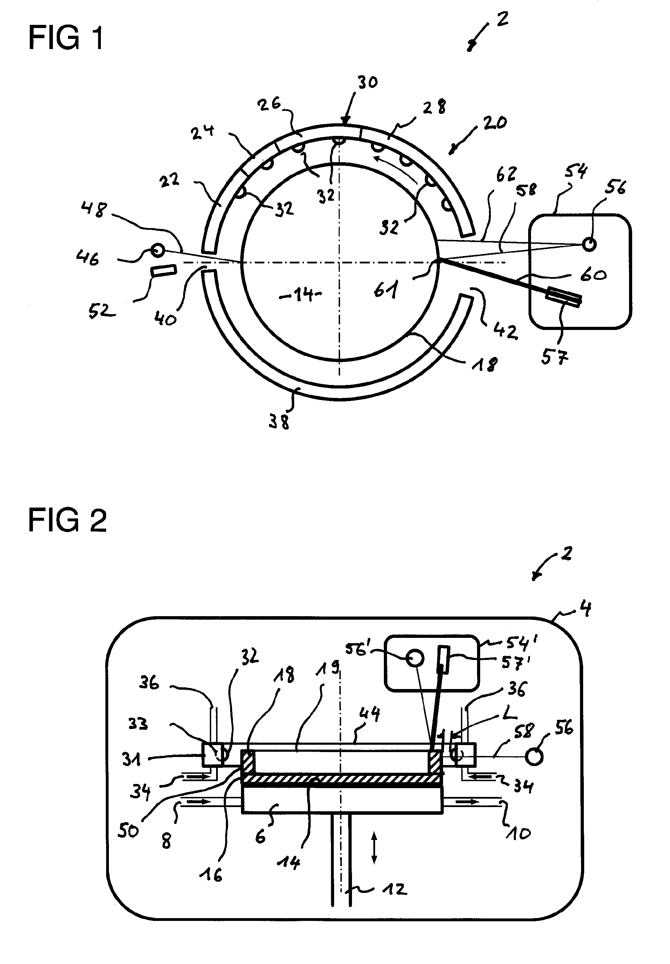

Die Figur 1 zeigt eine Draufsicht auf eine Ausführungsform der erfindungsgemäßen Vorrichtung 2 und die Figur 2 zeigt eine Seitenansicht einer Ausführungsform der erfindungsgemäßen Vorrichtung 2 mit einer Prozesskammer 4, die unter Vakuum gesetzt werden kann. Die Vorrichtung 2 umfasst einen Probentisch 6, der eine Wasserzuführung 8 und eine Wasserabführung 10 aufweisen kann. Damit wird eine Wasserkühlung des Probentisches 6 erreicht. Unterhalb des Probentisches 6 ist ein höhenverstellbarer Stempel 12 angeordnet. Auf dem, hier kreisförmigen, Probentisch 6 ist eine vorzugsweise ebenfalls wassergekühlte Startplattform 14 angeordnet. Diese Startplattform 14 ist zum Probentisch 6 nach unten hin wärmeisoliert, um den Probentisch 6 thermisch zu entkoppeln. Die Startplattform 14 kann aus einer hochtemperaturbeständigen Legierung hergestellt sein. Dazu gehören beispielsweise Ni-, Co-, Fe- und Mo-Basislegierungen. Die Startplattform 14 kann Stützstrukturen aufweisen. Auf der hier kreisförmigen Startplattform 14 ist auf dessen Umfang 16 ein ringförmiges Bauteil 18 teilweise aufgebaut, das Titanaluminid aufweist. Um das Bauteil 18 ist eine Heizquelle 20 angeordnet.

Die Heizquelle 20 weist im oberen Bereich der Figur 1 hier vier voneinander getrennte Einzelsegmente 22, 24, 26 und 28 auf. Die Einzelsegmente 22, 24, 26 und 28 stoßen einander an und bilden einen ersten Teilring 30 der Heizquelle 20. Jedes Einzelsegment weist mindestens einen Metallblock 31 und einen Leuchtkörper 32 auf. Der Metallblock 31 weist mindestens eine Aufnahme 33 für einen Leuchtkörper 32 auf. Ferner kann der Metallblock 31 eine Wasserzuführung 34 und Wasserabführung 36 für die Wasserkühlung aufweisen. Die Aufnahme 33 ist vorzugsweise verspiegelt. Auch kann der gesamte Metallblock 31 verspiegelt sein. Aus der Figur 1 ist zu entnehmen, dass beispielsweise das erste und zweite Einzelsegment 22 und 24 lediglich jeweils einen Leuchtkörper 32 aufweisen. Das dritte Einzelsegment 26 weist dagegen zwei Leuchtkörper 32 auf. Das vierte Einzelsegment 28 weist dagegen vier Leuchtkörper auf. Die Heizquelle 20 weist im unteren Bereich der Figur 1 einen zweiten Teilring 38 auf, der ähnlich aufgebaut ist, wie der erste Teilring 30.

Die beiden Teilringe 30 und 38 lassen links und rechts in der Figur 1 eine erste Lücke 40 und ein zweite Lücke 42 frei. Die beiden Teilringe 30 und 38, es können auch mehr als zwei Teilringe sein, wenn mehr als zwei Lücken benötigt werden, sind in einem im Wesentlichen äquidistanten Abstand L zum Bauteil 18 angeordnet. Wie aus der Figur 2 zu entnehmen ist, ist die oberste Kante 19 des Bauteils 18 unterhalb der obersten Kante 44 des Teilrings 30 angeordnet. Damit kann gesichert werden, dass die auf die oberste Kante 19 des Bauteils 18 aufzutragende Schicht auf eine temperierte Oberfläche mit einer Temperatur zwischen 500°C und 850°C trifft, so dass keine Mikrorisse entstehen können.

Außerhalb der Heizquelle 20 auf der Höhe der ersten Lücke 40 ist hier ein Laser 46, in der Figur 1 links abgebildet, zur Nacherwärmung bzw. Aufheizen des Bauteils 18 angeordnet. Der Laserstrahl 48 des Lasers 46 trifft dabei auf die Umfangsfläche 50 des Bauteils 18. Daneben ist ein Temperatursensor 52 angeordnet, der die Oberflächentemperatur auf der Umfangsfläche 50 misst.

Außerhalb der Heizquelle 20 auf der Höhe der zweiten Lücke 42 ist ein in der Figur 1 rechts abgebildeter Probenkopf 54 angeordnet. Der Probenkopf 54 umfasst eine Energiequelle 56, hier eine Elektronenquelle, und eine Zuführeinheit 57 für ein aus TiAl gebildeten Schweißzusatzstoff. Dieser ist stangeförmig bzw. drahtförmig. Die Elektronenquelle 56 erzeugt dabei einen ersten Elektronenstrahl 58, der auf der Umfangsfläche 50 des Bauteils 18 trifft. An dieser Stelle 61 wird die Spitze des Drahts 60 von der Zuführeinheit 57 positioniert. An der Schweißstelle 61 wird durch Aufschmelzen des Drahts 60 neues Material auf das bereits vorhandene Bauteil 18 aufgebracht. Dabei dreht sich der Probetisch 6 hier im Gegenuhrzeigersinn (siehe Figur 1). Schneckenförmig bzw. spiralförmig wächst das Bauteil 18 in die Höhe.

In Kombination oder alternativ dazu kann eine weiterer Probenkopf 54' mit einer Energiequelle 56' und einer Zuführeinheit 57' über dem Bauteil (siehe Figur 2) angeordnet sein. In alternativen Fall sind keine Lücken 40 und 42 notwendig, so dass die Heizquelle 20 einen geschlossen Ring bilden kann. Die Heizquelle 20 kann mittels der Einzelsegmente die Kontur des Bauteils 18 nachempfinden. In Kombination oder alternativ dazu kann der Probentisch 6 fest sein und der Probenkopf 54' entsprechend den 3D-Daten der zur Zeit aufzubauenden Schicht bewegt werden.

Die Elektronenquelle 56 bietet die Möglichkeit, ihren Strahl in mehrere Strahlen aufzuteilen, so dass, wie in Figur 1 sichtbar, ein zweiter Elektronenstrahl 62 von der Elektronenquelle 56 erzeugt wird. Dieser zweite Elektronenstrahl 62 kann die eben erschmolzene Schmelzspur und Struktur kontrolliert nacherwärmen, so dass eine reproduzierbare Abkühlgeschwindigkeit einstellbar ist.

Die als Strahlungsofen gebildete Heizquelle 20 sorgt für eine gleichmäßige Temperatur des gesamten im Heizbereich befindlichen Bauteils 18. Dabei kommt diese in den Figuren 1 und 2 abgebildete Heizquelle 20 mit unterschiedlichen Wandstärken ohne weiteres klar.

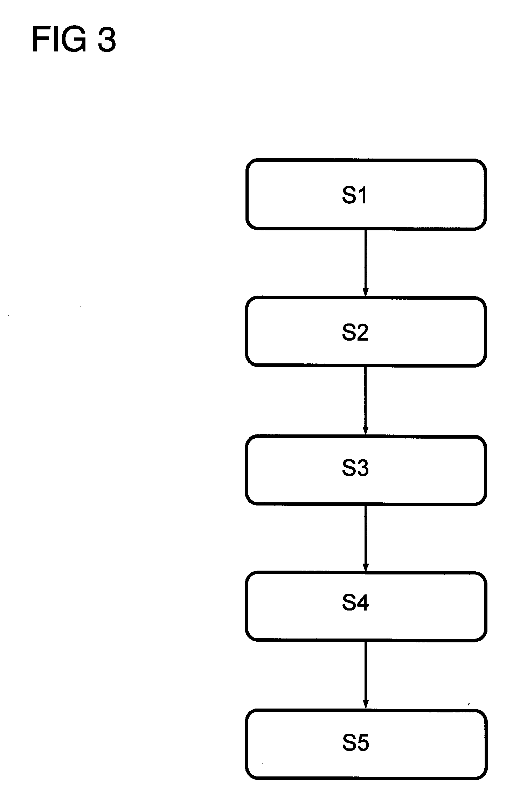

Die Figur 3 zeigt die einzelnen Verfahrensschritte einer ersten Ausführungsform. Alle erforderlichen Elemente, wie sie in den Figuren 1 und 2 abgebildet sind, sind in der Prozesskammer 4 angeordnet.

Zunächst wird in Schritt S1 die Prozesskammer 4 gereinigt. Dabei wird die Prozesskammer 4 bis auf einen Unterdruck von 10⁻⁵mbar evakuiert. Anschließend wird die Prozesskammer 4 mit einem Schutzgas (Ar und/oder He) geflutet. Nach dem Fluten wird wieder evakuiert. Die Spülung kann dabei bei Bedarf mehrmals wiederholt werden.

In Schritt S2 wird nun die Startplattform 16 bzw. das zu reparierende Bauteil 18 auf eine Temperatur zwischen 500°C und 850 °C mittels der als Strahlungsofen aufgeführten Heizquelle 20 vorgewärmt und der Probentisch 6 wird gedreht. Zeitgleich trifft der Draht 60 und der erste Elektronenstrahl 58 auf die Schweißstelle 61.

In Schritt S3 wird nach Beendigung des Baujobs das Bauteil langsam abgekühlt.

Anschließend werden in Schritt S4 eventuell vorhandene Stützstrukturen entfernt.

Abschließend erfolgt in Schritt S5 eine mechanische Nachbearbeitung des Bauteils 18. Hier werden die notwendigen Kontaktflächen des hier gezeigten Bauteils 18 mechanisch, bspw. durch Schleifen bzw. Fräsen, bearbeitet, um plane Oberflächen zu erhalten. Weitere Oberflächen des Bauteils, an denen hohe Spannungen auftreten, werden ebenfalls mechanisch nachbearbeitet.

Damit lassen sich große annähernd rotationssymmetrische Bauteile aus TiAl für Triebwerksanwendungen von Raumtemperatur bis 900°C herstellen. Damit können wenige große, komplexe Teile pro Triebwerk in geringen Stückzahlen kostengünstig hergestellt werden.

Damit kann mittels Elektronenstrahl-Auftragsschweißen ein additives Herstellverfahren angewendet werden, das verhältnismäßig geringe Bauzeiten, hohe Materialausbeute, endkonturnahe und komplexe Formgebung und damit bisher nicht aus TiAl fertigbare Bauteile und Strukturen ermöglicht.

### Bezugszeichenliste

- 2: Vorrichtung
- 4: Prozesskammer
- 6: Probentisch
- 8: Wasserzuführung von 6
- 10: Wasserabführung von 6
- 12: Stempel
- 14: Startplattform
- 16: Umfang von 14
- 18: Bauteil
- 19: Kante von 18
- 20: Heizquelle
- 22: Einzelsegment
- 24: Einzelsegment
- 26: Einzelsegment
- 28: Einzelsegment
- 30: Erster Teilring
- 31: Metallblock
- 32: Leuchtkörper
- 33: Aufnahme
- 34: Wasserzuführung von 31
- 36: Wasserabführung von 31
- 38: Zweite Teilring
- 40: erster Lücke
- 42: Zweite Lücke
- 44: Oberste Kante von 30
- 46: Laser
- 48: Laserstrahl
- 50: Umfangsfläche von 18
- 52: Temperatursensor
- 54: Probenkopf
- 56: Elektronenquelle
- 57: Zuführeinheit
- 58: Erster Elektronenstrahl
- 60: Draht
- 61: Schweißstelle

## Patentansprüche

1. Verfahren zur Herstellung und/oder Reparatur von, insbesondere rotationssymmetrischen, Bauteilen mit den folgenden Schritten:
a. Bereitstellen eines Bauteils (18) und/oder einer Startplattform (14),
b. Platzieren des Bauteils (18) und/oder der Startplattform (14) auf einen Probentisch (6),
c. Vorheizen des Bauteils (18) und/oder der Startplattform (14) auf eine bestimmte Temperatur mittels einer Heizquelle (20),
d. Aufbringen eines drahtförmigen und/oder stangenförmigen Schweißzusatzwerkstoffs (60), der TiAl beinhaltet, auf das Bauteil (18) und/oder Startplattform (14) mittels Auftragschweißen, indem eine Energiequelle (56) den Schweißzusatzwerkstoff (60) aufschmilzt,
wobei in Schritt c.) die bestimmte Temperatur, die insbesondere zwischen 500° und 850° beträgt, zwischen 300°C unterhalb und 50°C oberhalb der spröd-duktilen Übergangstemperatur des Werkstoffs des Bauteils liegt.

2. Verfahren nach Anspruch 1, wobei der Schritt c.) und/oder der Schritt d.) unter Vakuum, insbesondere bei einem Druck von weniger als 10⁻³mbar, durchgeführt wird.

3. Verfahren nach mindestens einem der vorherigen Ansprüche, wobei das Vorheizen in Schritt c.) mittels eines Strahlungsofens (20), eines Lasers (46) und/oder Elektronenquelle (56, 56') stattfindet.

4. Verfahren nach mindestens einem der vorherigen Ansprüche, wobei in Schritt c.) die Heizleistung zwischen 400W und 1200W beträgt.

5. Verfahren nach mindestens einem der vorherigen Ansprüche, wobei in Schritt d.) als Energiequelle ein Laser und/oder eine Elektronenquelle (56) verwendet wird.

6. Verfahren nach mindestens einem der vorherigen Ansprüche, wobei der Durchmesser des drahtförmigen und/oder stangenförmigen Schweißzusatzwerkstoff (60) 0,3 bis 2mm beträgt.

7. Verfahren nach mindestens einem der vorherigen Ansprüche, wobei in Schritt c.) und/oder in Schritt d.) das Bauteil (18) und/oder die Startplattform (14), insbesondere kontinuierlich, gedreht wird.

8. Bauteil, hergestellt nach einem der obigen Ansprüche, wobei das Bauteil ein Leitkranz, ein Gehäuseteil im Verdichter und/oder Turbine, ein Austrittsleitrad, ein Statorsegment und/oder ein Dichtungsring aus Titanaluminid ist.

9. Vorrichtung zur Herstellung und/oder Reparatur von, insbesondere rotationssymmetrischen, Bauteilen umfasst:
- eine Prozesskammer (4),
- einen, insbesondere rotatorisch und/oder translatorisch beweglichen, Probentisch (6),
- eine ringförmige Heizquelle (20), die um einen über den Probentisch (6) angeordneten Heizbereich angeordnet ist, und
- einen Probenkopf (54) mit mindestens einer Energiequelle (56) zum Aufschmelzen eines Schweißzusatzstoffes (60) und mit mindestens einer Zuführeinheit (57) des Schweißzusatzstoffes,
**dadurch gekennzeichnet, dass** die Heizquelle (20) aus mehreren Einzelsegmenten (22, 24, 26, 28) aufgebaut ist.

10. Vorrichtung nach 9, wobei die Vorrichtung einen Vorratsbehälter und/oder eine Fördereinheit für einen Schweißzusatzwerkstoff (60) umfasst, die in der Prozesskammer (4) angeordnet ist bzw. sind.

11. Vorrichtung nach mindestens einem der Ansprüche 9 bis 10, wobei die Heizquelle (20) einen Laser, eine Elektronenquelle und/oder ein Strahlungsofen aufweist.

12. Vorrichtung nach mindestens einem der Ansprüche 9 bis 11, wobei das Einzelsegment (22, 24, 26, 28) mindestens einen Leuchtkörper (32) und/oder mindestens einen, insbesondere wassergekühlten, Metallblock (31) aufweist.

13. Vorrichtung nach Anspruch 12, wobei der Leuchtkörper (32) in dem, insbesondere verspiegelten, Metallblock (31) angeordnet ist.

14. Vorrichtung nach mindestens einem der Ansprüche 12 bis 13, wobei der Abstand zwischen dem Leuchtkörper (32) und dem Bauteil (18) und/oder Startplattform (14) 1cm bis 30cm aufweist.

15. Vorrichtung nach mindestens einem der vorherigen Ansprüche 9 bis 14, wobei die Energiequelle einen Laser (46) und/oder eine Elektronenquelle (56) aufweist.
